# EUROPEAN PATENT SPECIFICATION

(11) **EP 4 120 553 B1**
(45) Date of publication and mention of the grant of the patent: **25.06.2025**
(21) Application number: 21768250.9
(22) Date of filing: 09.03.2021
(51) Int. Cl.: H02P 9/04, H02J 3/08

(54) **SYNCHRONOUS MACHINE DEVICE, VARIABLE SPEED PUMPED STORAGE POWER GENERATION APPARATUS, AND OPERATION METHOD**
SYNCHRONMASCHINENVORRICHTUNG, PUMPSPEICHERKRAFTERZEUGUNGSGERÄT MIT VARIABLER DREHZAHL UND BETRIEBSVERFAHREN
DISPOSITIF DE MACHINE SYNCHRONE, APPAREIL DE PRODUCTION D'ÉNERGIE DE STOCKAGE PAR POMPAGE À VITESSE VARIABLE ET PROCÉDÉ DE FONCTIONNEMENT

(30) Priority: 11.03.2020 JP 2020041667
(43) Date of publication of application: 18.01.2023
(73) Proprietor: Hitachi, Ltd., Chiyoda-ku Tokyo 100-8280 (JP); Hitachi Mitsubishi Hydro Corporation, Tokyo 108-0014 (JP)
(72) Inventor: KAWAZOE, Hironari, Tokyo 100-8280 (JP); KIKUCHI, Akira, Tokyo 100-8280 (JP); WATANABE, Kenta, Tokyo 100-8280 (JP); NAKAIDE, Yosuke, Tokyo 100-8280 (JP); BANDO, Akira, Tokyo 108-0014 (JP)
(74) Representative: MERH-IP Matias Erny Reichl Hoffmann Patentanwälte PartG mbB
(86) International application number: PCT/JP2021/009244
(87) International publication number: WO 2021/182459

(56) References cited:
- JP-A- 2001 057 735
- JP-A- 2001 057 735
- JP-A- 2009 033 798
- SUUL J A ET AL: "Variable speed pumped storage hydropower for integration of wind energy in isolated grids: case description and control strategies", 9 June 2008 (2008-06-09), pages 1 - 15, XP002759904, Retrieved from the Internet <URL:https://aaltodoc.aalto.fi/bitstream/handle/123456789/800/urn011517.pdf?sequence=1&isAllowed=y> [retrieved on 20160714]

## Description

### Technical Field

The present invention relates to a synchronous machine device, a variable speed pumped storage power generation device, and an operation method, in which a synchronous power generation motor device is connected to a power system via a parallel circuit of a power converter and a bypass line.

### Background Art

A form for implementing a variable speed pumped storage power generation device includes a system in which an inductive power generation motor is used to achieve a variable speed by secondary excitation of the inductive power generation motor, and a system in which a synchronous power generation motor device is connected to a power system via a parallel circuit of a power converter and a bypass line and a variable speed is achieved by adjusting a frequency in the power converter.

The present invention relates to a synchronous machine device of a system using a synchronous power generation motor device, a variable speed pumped storage power generation device, and a step-out estimation method. For example, PTL 1 discloses a variable speed operation control device and an operation method of a hydraulic power generation system that improve power generation efficiency by switching between a bypass operation mode in which a power generation device is operated in a manner of being directly connected to a power system through a bypass line and a converter operation mode in which the power generation device is operated via a power converter. In addition, in PTL 2, equally a method to detect faults in a main circuit in case an electric motor has been already started is described. Herein, specifically, it is stipulated to detect a field current of a synchronous electric motor or a synchronous generation electric motor being a master machine and a second synchronous generation electric motor being used as a slave machine and determine a given circuit error in case the detected field current exceeds a predetermined range, leading further to the effect that additionally arranged circuit breakers may be opened so as to allow short-circuiting of the faulty circuit. Moreover, in NPTL 1, a number of different strategies to further improve the reliability of speed pumped storage hydropower plants for balancing power fluctuations from wind power in an isolated grid are disclosed. Specifically, a topology based on a synchronous machine and a full scale back-to-back voltage source converter are suggested for obtaining variable speed operation of a pump-turbine unit.

### Citation List

### Patent Literature

PTL 1: Japanese Patent No. 6246753
PTL 2: Japanese Published Patent Application No. 2001 057735 A

### Non-Patent Literature

NPTL 1: Suul J. A. et al. "Variable speed pumped storage hydropower for integration of wind energy in isolated grids: case description and control strategies", Nordic Workshops on Power and Industrial Electronics, June 2008

### Summary of Invention

### Technical Problem

In order to enable a variable speed pumped storage power generation device and a synchronous machine device of a system using a synchronous power generation motor device to contribute to stabilization of a power system, it is necessary to ensure operation continuity when there is a system fault. However, in a variable speed pumped storage power generation device that is switched between a bypass operation and a converter operation, for example, when troubleshooting of a system fault is delayed due to a main protection failure during the bypass operation, a synchronous speed of a power generation motor device may be greatly deviated and the power generation motor device steps out synchronization, which leads to the stop of the power generation motor device.

Here, an object of the present invention to provide a synchronous machine device, a variable speed pumped storage power generation device, and an operation method that can improve an operation tolerance when a system fault occurs during a bypass operation.

### Solution to Problem

In order to solve the above-mentioned problems, a synchronous machine device according to independent claim 1 is proposed.

Dependent claims define preferable embodiments of the proposed invention.

### Advantageous Effects of Invention

It is possible to increase the degree of contribution to a stable operation of a power system of a device by improving an operation tolerance of the synchronous machine device and the variable speed pumped storage power generation device when there is a system fault.

### Brief Description of Drawings

FIG. 1 is a diagram showing a configuration example of a variable speed pump device according to an embodiment of the present invention.
FIG. 2 is a diagram showing a flow of a calculation process in a step-out estimation unit 101.
FIG. 3 is a diagram showing a method of calculating a step-out determination threshold Eth of a power generation motor device.
FIG. 4 is a block diagram showing a bypass line opening determination unit.
FIG. 5 is a diagram showing a waveform example when there is a system fault in a case where the present invention is not applied.
FIG. 6 is a diagram showing a waveform example when there is a system fault in a case where the present invention is applied.
FIG. 7 is a diagram showing another method of calculating the step-out determination threshold Eth.

### Description of Embodiments

Hereinafter, embodiments of the present invention will be described with reference to the drawings.

### [First Embodiment]

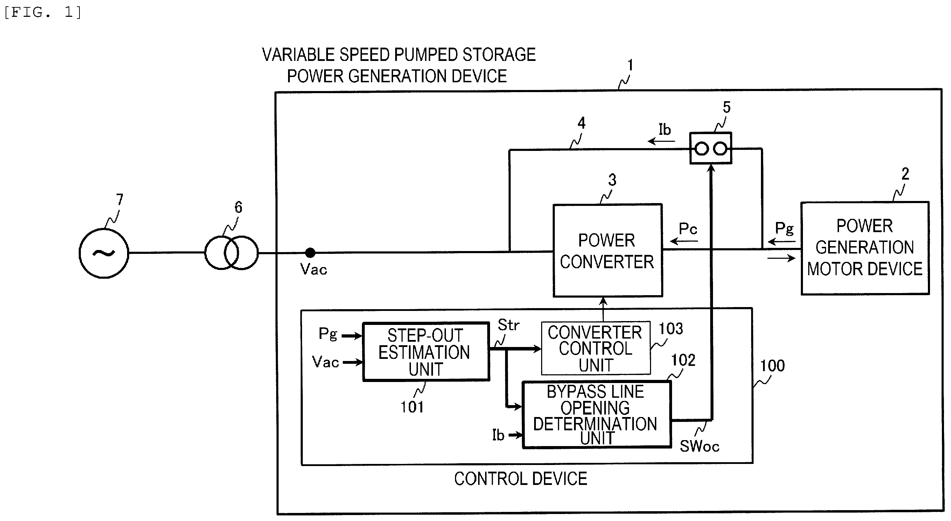

FIG. 1 is a diagram showing a configuration example of a variable speed pumped storage power generation device 1 according to a first embodiment of the present invention. In the variable speed pumped storage power generation device 1, a power generation motor device 2 is connected to a power system 7 via a parallel circuit of a power converter 3 and a bypass line 4 including a circuit breaker 5, and a transformer 6. The control device 100 receives signals from respective units of the variable speed pumped storage power generation device 1 so as to estimate whether the power system 7 steps out, thereby controlling the power converter 3.

Although the power generation motor device 2 is shown in FIG. 1 in a simplified manner, the power generation motor device 2 includes a water wheel pump that converts potential energy of water into rotational energy (or converts rotational energy into potential energy), a synchronous power generation motor that converts the rotational energy into a power generation output Pg (or converts a pumping input Pg into rotational energy), a speed regulator (a governor) that controls a rotational speed of the water wheel pump, an automatic voltage regulator (AVR) that adjusts an excitation voltage of a rotor to control a terminal voltage of a power generator.

Here, the power generation motor device 2 in the present specification may be a synchronous power generator or a synchronous motor, in addition to a so-called power generation motor. In short, as long as the power generation motor device 2 has a configuration of a synchronous machine connected to a power system via a parallel circuit of the power converter 3 and the bypass line 4 including the circuit breaker 5, the power generation motor device 2 may be a single machine such as a synchronous power generator and a synchronous motor, or may be a power generator motor that performs both power generation and pumping. In the present invention, such machines are collectively referred to as a power generation motor device (a power generation motor) .

Although details will be described later, a step-out estimation control of the power system 7 according to the present invention can be applied to any mode of a power generation motor operation. In short, the step-out estimation control can be applied as long as the power generation motor device 2 is in a direct connection state in which the power generation motor device 2 is connected to a power system via the bypass line 4 including the circuit breaker 5.

A power generation operation mode will be described as an example, and the power converter 3 includes a first converter that converts the power generation output Pg from AC to DC and a second converter that converts DC power to AC power of a commercial frequency. A two-level, three-level, or multi-level converter can be used for each converter. The power converter 3 has a frequency conversion function, and the frequency conversion function enables the power converter 3 to shift from a low-speed rotation range to a high-speed rotation range in a pumped storage power generation operation using a synchronous power generation motor.

The bypass line 4 is a line for directly connecting the power generation motor device 2 to the power system 7 via the transformer 6. The bypass line is opened and closed by the circuit breaker 5. After the synchronous power generation motor is started up, the synchronous power generation motor is disconnected from a power converter 3 side and shifted to a connection with a bypass line 4 side, and the synchronous power generation motor can be operated at high efficiency by using a direct connection operation.

The control device 100 includes a step-out estimation unit 101 that estimates whether the power generation motor device 2 steps out based on power of the power generation motor device 2 (the power generation output Pg during a power generation operation and the pumping input Pg during a motor operation) and an AC voltage Vac at an interconnection point where the variable speed pumped storage power generation device is interconnected to a power system or the like, and that calculates a start-up command Str of the power converter 3, a bypass line opening determination unit 102 that calculates an opening or closing command SWoc of the circuit breaker 5 based on a current Ib of the bypass line 4 and the start-up command Str, and a converter control unit 103 that controls power Pc of the power converter 3.

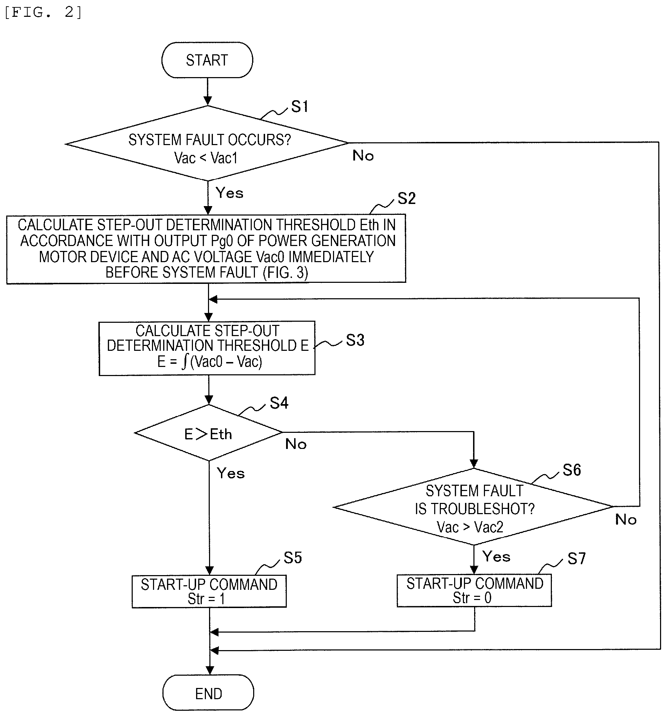

Next, a flow of a calculation process in the step-out estimation unit 101 will be described with reference to FIG. 2. Here, it is assumed that the power generation motor device 2 shown in FIG. 1 is connected to a power system via the bypass line 4 and is in a so-called direct connection operation state. Since the following concept is exactly the same during a power generation operation and a motor operation, the power generation output Pg during the power generation operation will be described as a representative example of the power of the power generation motor device 2 in the following description.

In a process of step S1 shown in FIG. 2, it is determined whether a system fault occurs based on whether the AC voltage Vac is lower than a first threshold Vac1. When it is detected that a system fault occurs, the calculation process proceeds to a process of step S2, and when it is detected that no system fault occurs, the calculation process is ended. In subsequent processes shown in FIG. 2, when a system fault occurs and a voltage drop occurs, it is estimated whether this influence develops to a later stage in which the power system steps out. When the power system may step out, an early countermeasure will be taken using the power converter 3.

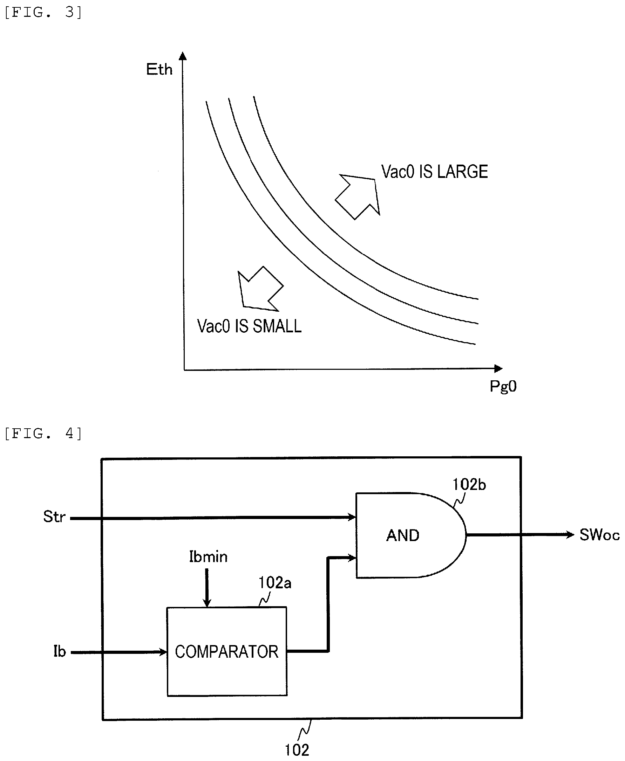

In the process of step S2, a step-out determination threshold Eth is calculated in accordance with power Pg0 of the power generation motor device 2 and an AC voltage Vac0 immediately before the system fault, the step-out determination threshold Eth being a threshold for determining whether the power system steps out. A method of calculating the step-out determination threshold Eth will be described later with reference to FIG. 3.

In a process of step S3, a step-out determination value E is calculated by integrating a difference between the AC voltage Vac0 immediately before the system fault and an AC voltage Vac at a current time. Here, the step-out determination value E can be regarded as a value obtained by integrating a difference between a mechanical input and output and an electrical input and output applied to the power generation motor device 2 during a fault continuation period after the occurrence of the fault. It can be said that the power system is likely to step out as the step-out determination value E increases.

In a process of step S4, the step-out determination value E is compared with the step-out determination threshold Eth, and when the step-out determination value E exceeds the step-out determination threshold Eth, it is determined that the power generation motor device 2 will step out later. In a process of step S5, the start-up command Str of the power converter is set to 1 to start up the power converter 3. When the step-out determination value E is lower than the step-out determination threshold Eth, the calculation process proceeds to step S6.

In a process of step S6, it is determined whether the system fault is troubleshot based on whether the AC voltage Vac exceeds a second threshold Vac2. When it is determined that the system fault is not troubleshot, the calculation process returns to the process of step S3 and the step-out estimation process of the power generation motor device is continued. When it is determined that the system fault is troubleshot, the calculation process proceeds to a process of step S7, and the start-up command Str of the power converter is set to 0, that is, the power converter is maintained in a stopped state, and the calculation process is ended. It is possible to prevent unnecessary operation switching between the bypass operation and the converter operation by using a step-out estimation method of the power generation motor device described above.

According to the series of processes described above, a comparison process between the step-out determination value E and the step-out determination threshold Eth is performed during the fault continuation period which is a period from when the fault occurs up to when the fault is troubleshot. As a result, it is possible to appropriately evaluate an influence on step-out according to the magnitude of the fault (the magnitude of a voltage drop) and the fault duration period.

A method of calculating the step-out determination threshold Eth in the process of step S2 will be described with reference to FIG. 3.

In the process of step S2, the step-out determination threshold Eth is calculated using a table as shown in the drawing in accordance with the power Pg0 of the power generation motor device 2 and the AC voltage Vac0 immediately before the system fault. As the power Pg0 of the power generation motor device 2 decreases, the step-out determination threshold Eth is set to a larger value. In a case where the power Pg0 of the power generation motor device 2 is maintained at the same value, the step-out determination threshold Eth is set to a smaller value as the AC voltage Vac0 decreases.

FIG. 4 is a block diagram showing the bypass line opening determination unit 102. A comparator 102a determines whether the current Ib of the bypass line is lower than a threshold Ibmin. The comparator 102a outputs 1 when the current Ib is lower than the threshold Ibmin, and outputs 0 when the current Ib is not lower than the threshold Ibmin.

An opening or closing command SWoc of the circuit breaker outputs 1 (a circuit breaker opening command) when the start-up command Str of the power converter described above in an AND logic circuit 102b is 1 (the power converter is in a start-up state) and the current Ib of the bypass line is lower than the threshold Ibmin. As a result, an operation of the power generation motor device 2 shifts from the bypass operation to the converter operation.

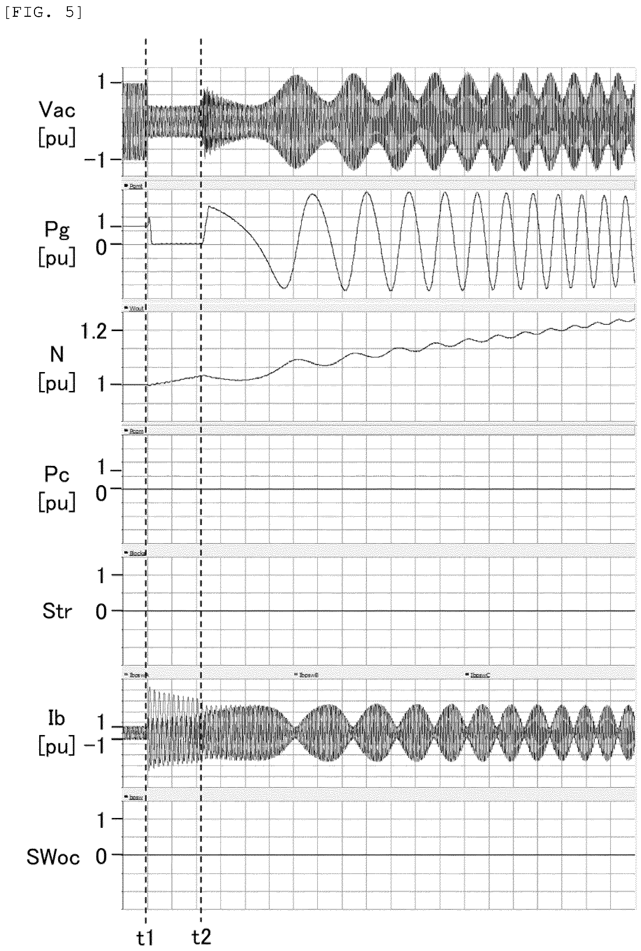

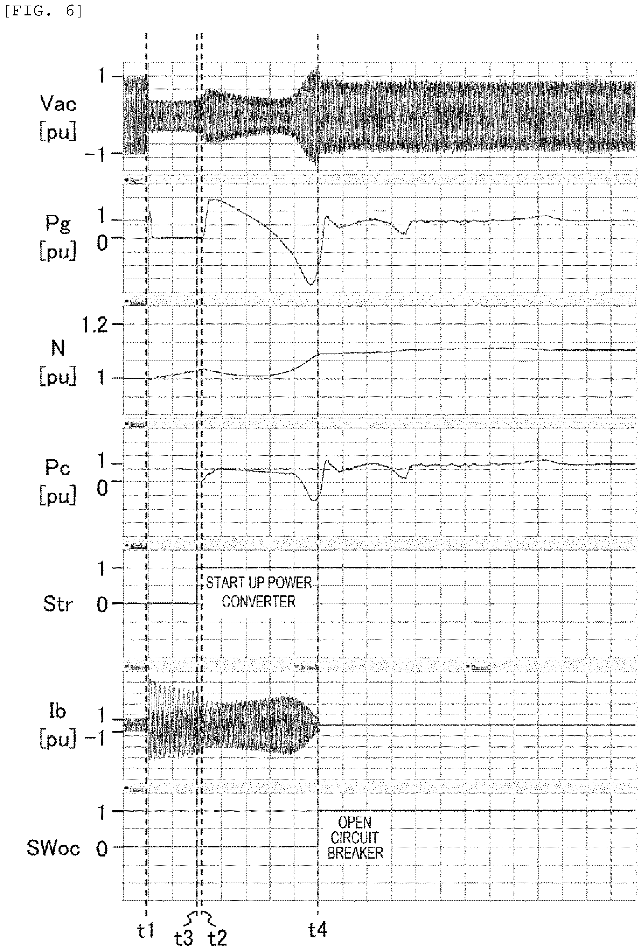

Next, a waveform example when a fault occurs in accordance with whether the present invention is applied will be described with reference to FIGS. 5 and 6. FIG. 5 is a waveform example when there is a system fault in a case where the bypass operation is continued without applying the present invention. FIG. 6 shows a case where the bypass operation is switched to the converter operation. The waveform indicates a system voltage Vac, the power Pg and a rotational speed N of the power generation motor device 2, the power Pc and the start-up command Str of the power converter, the current Ib of the bypass line, and the opening or closing command SWoc of the circuit breaker from the top. A fault condition is a condition under which a three-phase equilibrium fault occurs in an AC system at a time t1 and the fault is troubleshot at a time t2 in both FIGS. 5 and 6.

When the bypass operation shown in FIG. 5 is continued, it is shown that the rotational speed N of the power generation motor device 2 greatly deviates from 1 [pu] of a synchronous speed after the system fault is troubleshot, the power generation motor device 2 steps out, and the device is stopped.

On the other hand, FIG. 6 shows a case where it is determined that the power generation motor device 2 steps out at a time t3 before the time t2 when the fault is troubleshot, the power converter 3 starts up, and the circuit breaker 5 of the bypass line 4 is opened at a time t4.

Since an electric torque of the power generation motor device 2 can be controlled by the power converter 3 by switching an operation mode from the bypass operation to the converter operation, an increase in the rotational speed of the power generation motor device 2 is prevented. A transiently increased rotational speed can be adjusted by a governor control of the power generation motor device 2 or a power control of the power converter 3.

In this manner, it is possible to avoid step-out of the power generation motor device 2 when a system fault occurs during the bypass operation according to the first embodiment of the present invention. As a result, an operation tolerance of the variable speed pumped storage power generation device can be improved, and it is possible to increase the degree of contribution to a stable operation of a power system of the device.

Although the first embodiment exhibits an effect in the case of a power generation operation, the present invention can also be applied to a pumping operation.

### [Second Embodiment]

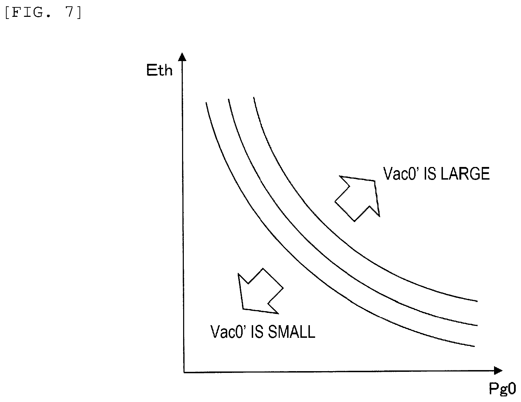

In a second embodiment, another method of calculating the step-out determination threshold Eth will be described. In the first embodiment, the step-out determination threshold Eth is calculated based on the power Pg0 of the power generation motor device 2 and the AC voltage Vac0 immediately before the system fault, while in the second embodiment, an AC voltage VacO' immediately after the system fault may be used instead of the AC voltage Vac0 immediately before the system fault, as shown in FIG. 7. In this case as well, as the power Pg0 of the power generation motor device 2 decreases, the step-out determination threshold Eth is set to a larger value.

In a case where the power Pg0 of the power generation motor device 2 is maintained at the same value, the step-out determination threshold Eth is set to a smaller value as the AC voltage Vac0 decreases.

### Reference Signs List

1 variable speed pumped storage power generation device
2 power generation motor device
3 power converter
4 bypass line
5 circuit breaker
6 transformer
7 power system
100 control device
101 step-out estimation unit
102 bypass line opening determination unit
102a comparator
102b AND logic circuit
103 converter control unit

## Claims

1. A synchronous machine device in which a power generation motor device (2) is connected to a power system (7) via a parallel circuit of a power converter (3) and a bypass line (4) including a circuit breaker (5), the synchronous machine device **characterized by**:
an estimation unit (101) configured to estimate whether the power generation motor device (2) steps out based on power of the power generation motor device (2) and a system voltage when a system fault occurs in a state in which the power generation motor device (2) is directly connected to the power system (7) via the parallel circuit and the power converter (3) is stopped; and
a control device (100) that includes a control unit (103) configured to control to start up the power converter (3) when it is estimated that the power generation motor device (2) steps out and to control the electric torque of the power generation motor device (2) based on the controlled power converter (3) in order to prevent the step out.

2. The synchronous machine device according to claim 1, wherein
the estimation unit (101) includes a unit configured to calculate a step-out determination threshold of the power generation motor device (2) in accordance with the power of the power generation motor device (2) and the system voltage when the system fault occurs, a unit configured to calculate a step-out determination value, E, based on the system voltage immediately before the system fault and a system voltage at a current time during a fault continuation period, and a unit configured to compare the step-out determination threshold and the step-out determination value.

3. The synchronous machine device according to claim 1 or 2, wherein
the control unit (103) includes a bypass line opening determination unit (102) configured to open the circuit breaker (5) of the bypass line (4) by determining that a current of the bypass line (4) is lower than a predetermined value after the power converter (3) starts up.

4. A variable speed pumped storage power generation device (1) provided in the synchronous machine device according to any one of claims 1 to 3, wherein
the variable speed pumped storage power generation device (1) is a power generation motor device (2) that is connected to a pump water wheel and is configured to perform a variable speed pumped storage power generation operation.

5. The synchronous machine device according to claim 2, wherein
the unit of the estimation unit (101) that calculates the step-out determination threshold of the power generation motor device (2) is configured to calculate the step-out determination threshold of the power generation motor device (2) in accordance with the power of the power generation motor device (2) and the system voltage immediately before the system fault.

6. The synchronous machine device according to claim 2, wherein
the unit of the estimation unit (101) that calculates the step-out determination threshold of the power generation motor device (2) is configured to calculate the step-out determination threshold of the power generation motor device in accordance with the power of the power generation motor device (2) immediately before the system fault and a system voltage immediately after the system fault.

## Patentansprüche

1. Synchronmaschinenvorrichtung, in der eine Stromerzeugungsmotorvorrichtung (2) über eine Parallelschaltung eines Stromrichters (3) und einer Umgehungsleitung (4), die einen Schutzschalter (5) enthält, mit einem Stromversorgungssystem (7) verbunden ist, wobei die Synchronmaschinenvorrichtung **gekennzeichnet ist durch**:
eine Schätzeinheit (101), die konfiguriert ist, basierend auf dem Strom der Stromerzeugungsmotorvorrichtung (2) und einer Systemspannung zu schätzen, ob die Stromerzeugungsmotorvorrichtung (2) abschaltet, wenn ein Systemfehler in einem Zustand auftritt, in dem die Stromerzeugungsmotorvorrichtung (2) über die Parallelschaltung direkt mit dem Stromversorgungssystem (7) verbunden ist und der Stromrichter (3) gestoppt ist; und
eine Steuervorrichtung (100), die eine Steuereinheit (103) enthält, die konfiguriert ist, zu steuern, den Stromrichter (3) zu starten, wenn geschätzt wird, dass die Stromerzeugungsmotorvorrichtung (2) abschaltet, und das elektrische Drehmoment der Stromerzeugungsmotorvorrichtung (2) basierend auf dem gesteuerten Stromrichter (3) zu steuern, um das Abschalten zu verhindern.

2. Synchronmaschinenvorrichtung nach Anspruch 1, wobei
die Schätzeinheit (101) eine Einheit, die konfiguriert ist, einen Abschaltbestimmungsschwellenwert der Stromerzeugungsmotorvorrichtung (2) gemäß dem Strom der Stromerzeugungsmotorvorrichtung (2) und der Systemspannung zu berechnen, wenn der Systemfehler auftritt, eine Einheit, die konfiguriert ist, einen Abschaltbestimmungswert E basierend auf der Systemspannung unmittelbar vor dem Systemfehler und einer Systemspannung zu einer aktuellen Zeit während einer Fehlerfortsetzungsperiode zu berechnen, und eine Einheit enthält, die konfiguriert ist, den Abschaltbestimmungsschwellenwert und den Abschaltbestimmungswert zu vergleichen.

3. Synchronmaschinenvorrichtung nach Anspruch 1 oder 2, wobei
die Steuereinheit (103) eine Umgehungsleitungsöffnungsbestimmungseinheit (102) enthält, die konfiguriert ist, den Schutzschalter (5) der Umgehungsleitung (4) zu öffnen, indem bestimmt wird, dass ein Strom der Umgehungsleitung (4) niedriger als ein vorbestimmter Wert ist, nachdem der Stromrichter (3) gestartet wurde.

4. Pumpspeicherstromerzeugungsvorrichtung (1) mit variabler Drehzahl, die in der Synchronmaschinenvorrichtung nach einem der Ansprüche 1 bis 3 bereitgestellt ist, wobei
die Pumpspeicherstromerzeugungsvorrichtung (1) mit variabler Drehzahl eine Stromerzeugungsmotorvorrichtung (2) ist, die mit einem Pumpenwasserrad verbunden ist und konfiguriert ist, einen Pumpspeicherstromerzeugungsbetrieb mit variabler Drehzahl durchzuführen.

5. Synchronmaschinenvorrichtung nach Anspruch 2, wobei
die Einheit der Schätzeinheit (101), die den Abschaltbestimmungsschwellenwert der Stromerzeugungsmotorvorrichtung (2) berechnet, konfiguriert ist, den Abschaltbestimmungsschwellenwert der Stromerzeugungsmotorvorrichtung (2) gemäß dem Strom der Stromerzeugungsmotorvorrichtung (2) und der Systemspannung unmittelbar vor dem Systemfehler zu berechnen.

6. Synchronmaschinenvorrichtung nach Anspruch 2, wobei
die Einheit der Schätzeinheit (101), die den Abschaltbestimmungsschwellenwert der Stromerzeugungsmotorvorrichtung (2) berechnet, konfiguriert ist, den Abschaltbestimmungsschwellenwert der Stromerzeugungsmotorvorrichtung gemäß dem Strom der Stromerzeugungsmotorvorrichtung (2) unmittelbar vor dem Systemfehler und einer Systemspannung unmittelbar nach dem Systemfehler zu berechnen.

## Revendications

1. Dispositif de machine synchrone dans lequel un dispositif de moteur de génération d'énergie (2) est connecté à un système d'alimentation (7) par l'intermédiaire d'un circuit parallèle d'un convertisseur de puissance (3) et d'une ligne de dérivation (4) comprenant un disjoncteur (5), le dispositif de machine synchrone étant **caractérisé par** :
une unité d'estimation (101) configurée pour estimer si le dispositif de moteur de génération d'énergie (2) sort sur la base d'une puissance du dispositif de moteur de génération d'énergie (2) et d'une tension de système lorsqu'un défaut de système se produit dans un état dans lequel le dispositif de moteur de génération d'énergie (2) est directement connecté au système d'alimentation (7) par l'intermédiaire du circuit parallèle et le convertisseur de puissance (3) est arrêté ; et
un dispositif de commande (100) qui comprend une unité de commande (103) configurée pour commander le démarrage du convertisseur de puissance (3) lorsqu'il est estimé que le dispositif de moteur de génération d'énergie (2) sort et pour commander le couple électrique du dispositif de moteur de génération d'énergie (2) sur la base du convertisseur de puissance commandé (3) afin d'empêcher la sortie.

2. Dispositif de machine synchrone selon la revendication 1, dans lequel
l'unité d'estimation (101) comprend une unité configurée pour calculer un seuil de détermination de sortie du dispositif de moteur de génération d'énergie (2) en fonction de la puissance du dispositif de moteur de génération d'énergie (2) et de la tension de système lorsque le défaut de système se produit, une unité configurée pour calculer une valeur de détermination de sortie, E, sur la base de la tension de système immédiatement avant le défaut de système et d'une tension de système à un instant actuel pendant une période de continuation de défaut, et une unité configurée pour comparer le seuil de détermination de sortie et la valeur de détermination de sortie.

3. Dispositif de machine synchrone selon la revendication 1 ou 2, dans lequel
l'unité de commande (103) comprend une unité de détermination d'ouverture de ligne de dérivation (102) configurée pour ouvrir le disjoncteur (5) de la ligne de dérivation (4) en déterminant qu'un courant de la ligne de dérivation (4) est inférieur à une valeur prédéterminée après le démarrage du convertisseur de puissance (3).

4. Dispositif de génération d'énergie à accumulation pompée à vitesse variable (1) prévu dans le dispositif de machine synchrone selon l'une quelconque des revendications 1 à 3, dans lequel
le dispositif de génération d'énergie à accumulation pompée à vitesse variable (1) est un dispositif de moteur de génération d'énergie (2) qui est connecté à une roue à eau de pompe et est configuré pour effectuer une opération de génération d'énergie à accumulation pompée à vitesse variable.

5. Dispositif de machine synchrone selon la revendication 2, dans lequel
l'unité de l'unité d'estimation (101) qui calcule le seuil de détermination de sortie du dispositif de moteur de génération d'énergie (2) est configurée pour calculer le seuil de détermination de sortie du dispositif de moteur de génération d'énergie (2) en fonction de la puissance du dispositif de moteur de génération d'énergie (2) et de la tension de système immédiatement avant le défaut de système.

6. Dispositif de machine synchrone selon la revendication 2, dans lequel
l'unité de l'unité d'estimation (101) qui calcule le seuil de détermination de sortie du dispositif de moteur de génération d'énergie (2) est configurée pour calculer le seuil de détermination de sortie du dispositif de moteur de génération d'énergie en fonction de la puissance du dispositif de moteur de génération d'énergie (2) immédiatement avant le défaut de système et d'une tension de système immédiatement après le défaut de système.
